# EUROPEAN PATENT SPECIFICATION

(11) **EP 3 343 869 B1**
(45) Date of publication and mention of the grant of the patent: **09.06.2021**
(21) Application number: 17210794.8
(22) Date of filing: 28.12.2017
(51) Int. Cl.: H04L 29/06, G06F 21/55, G06F 21/57

(54) **A METHOD FOR MODELING ATTACK PATTERNS IN HONEYPOTS**
VERFAHREN ZUR MODELLIERUNG VON ANGRIFFSMUSTERN IN HONIGTÖPFEN
PROCÉDÉ DE MODÉLISATION DE MOTIFS D'ATTAQUE DANS DES LEURRES

(30) Priority: 28.12.2016 IL 24982716
(43) Date of publication of application: 04.07.2018
(73) Proprietor: Deutsche Telekom AG, 53113 Bonn (DE)
(72) Inventor: MIMRAN, Dudu, 6215505 Tel Aviv (IL); SHAPIRA, Bracha, 8472811 Beer Sheva (IL); ROKACH, Lior, 8496500 Omer (IL); BAR, Ariel, 7740914 Ashdod (IL); UNGER, Moshe, 5228559 Ramat Gan (IL); BRODT, Oleg, 8471621 Beer Sheva (IL)
(74) Representative: Savi, Massimiliano

(56) References cited:
- ABDALLAH GHOURABI ET AL: "Characterization of attacks collected from the deployment of Web service honeypot : Characterization of attacks from the deployment of honeypot", SECURITY AND COMMUNICATION NETWORKS, vol. 7, no. 2, 1 February 2014 (2014-02-01), pages 338-351, XP055455899, ISSN: 1939-0114, DOI: 10.1002/sec.737
- IGLESIAS FELIX ET AL: "Modelling IP darkspace traffic by means of clustering techniques", 2014 IEEE CONFERENCE ON COMMUNICATIONS AND NETWORK SECURITY, IEEE, 29 October 2014 (2014-10-29), pages 166-174, XP032714723, DOI: 10.1109/CNS.2014.6997483 [retrieved on 2014-12-23]
- KATERINA GOSEVA-POPSTOJANOVA ET AL: "Classification of Malicious Web Sessions", COMPUTER COMMUNICATIONS AND NETWORKS (ICCCN), 2012 21ST INTERNATIONAL CONFERENCE ON, IEEE, 30 July 2012 (2012-07-30), pages 1-9, XP032229735, DOI: 10.1109/ICCCN.2012.6289291 ISBN: 978-1-4673-1543-2
- THONNARD O ET AL: "A framework for attack patterns' discovery in honeynet data", DIGITAL INVESTIGATION, ELSEVIER, AMSTERDAM, NL, vol. 5, 1 September 2008 (2008-09-01), pages S128-S139, XP023783338, ISSN: 1742-2876, DOI: 10.1016/J.DIIN.2008.05.012 [retrieved on 2008-08-09]

## Description

### Field of the Invention

The present invention relates to the field of protecting against network attacks. More particularly, the present invention relates to a method for discovering network attacks patterns in cyber-attack sensor systems.

### Background of the Invention

A honeypot is a computer system, used in computer networks as computer security mechanisms for detecting, deflecting and counteracting cyber-attacks. The honeypot is in fact a fake network element (such as a server) which imitates the behavior of a real element. The honeypot may be formed as a separate physical computer, or it may be formed as a fake virtual computer within the real computer. The honeypot may comprise, for example, a fake operating system and fake data, that in combination appear to be an authentic part of the network and that seems to perform like a real system. However, the honeypot is in fact well isolated from the real system, and it is typically monitored to obtain data about the attackers. When an attacker attempts to access the network, his access to the real system is blocked, and he is instead referred to the honeypot, which in turn disguises itself as a real element of the system. While presenting the attacker with a fake operating system, applications and data, the honeypot can gain information regarding the attack and the attacker. Such type of honeypot is sometimes referred to in the art as a "research honeypot", as it gathers behavioral and characteristic parameters of the attacker.

Different types of honeypots secure different types of applications, i.e. web-based and SSH-based. Web-based honeypots secure web-based applications that are accessed over a network, rather than existing within the memory of a device. SSH-based honeypots secure applications that exist within the memory of a device, which is in turn accessed by a user over a network.

After a honeypot gains attack-related metadata, security experts analyze the metadata in order to better understand the attacks and detect attack patterns and attack behaviors. These patterns can be considered as the DNA of the attack forensics, as they describe common scenarios of the attacks. More specifically, the forensic information may include common attack patterns and their characteristics, distribution of the observed attack patterns, similarities between discovered attack patterns, and the most critical features that are typical to the discovered attack patterns.

Existing modeling systems as disclosed in Iglesias Felix et al: " Modeling IP darkspace traffic by means of clustering techniques" (2014 IEEE conference on communications and network security, IEEE, 29 October 2014, pages 166-174, XP032714723), monitor complete network traffic and trace communication data for determining attacks patterns and models. Such data contains all the traffic between the attacker and the attacked honeypot. A file containing the entire traffic data is commonly very large, a fact which makes the analysis to be a complicated task to perform, due to the large volume of data to be analyzed. However, this solution requires a higher computational power for analyzing the data and much higher storage requirements than the present invention.

Abdallah Ghourabi et al, security and communication networks, vol. 7 no. 2 , 1 February 2014, XP055455899 discloses Characterization of attacks collected from the deployment of Web service honeypot. However, in this solution, the analysis of the of the groups created after the clustering requires a manual and precise scanning.

Katerina Goseva-Popstojanova et al, un computer communications and networks (ICCCN), 2012 21st international conference on, IEEE, 30 July 2012, pages 1-9, XP032229735, describes classification of malicious Web sessions. However, in this solution, the attacks are classified to predefined families, i.e. it relates to a supervised method, which requires tagging of each attack previously observed to one of the families that were predefined. This solution requires a long time of work from security specialists.

It is therefore an object of the present invention to provide a method for modeling attack patterns in a monitored honeypot system, by analyzing a relatively small sub-set of the entire data which is communicated between the attacker and the honeypot.

Other objects and advantages of this invention will become apparent as the description proceeds.

### Summary of the Invention

The present invention relates to a method for modeling cyber-attack patterns in a honeypot system, the main features of which are disclosed in the attached claims.

In another embodiment, the invention relates to a method for modeling cyber-attack patterns in a honeypot system, wherein for each monitored cyber-attack, data fields are collected that contain some or all of the following: the IP address of the attacked honeypot; the timestamp that the observed attack was recorded in the system; the honeypot framework version; location information about the attacker (derived from the IP address of the attacker); the ISP provider of the attacker (derived from the IP address of the attacker); additional textual data that can be associated to the attack - in this example, the attack data consists of the header of the HTTP request; the type of the honeypot; the country of the attacker (derived from the IP address of the attacker); attack record Id (automatically generated); The identifier of the honeypot in the system; the original attack request observed by the honeypot; the timestamp of the observed attack; and the IP address of the attacker.

In still another embodiment, the invention relates to a method for modeling cyber-attack patterns in a honeypot system, wherein the contextual subset of cyber-attacks relates to at least one of the following: the attack time; the attacked sensors; the attacking machines; or the attacking countries.

In still another embodiment, the invention relates to a method for modeling cyber-attack patterns in a honeypot system, wherein the feature extraction is carried out in two phases, wherein the first phase extracts features from individual attacks, and the second phase extracts features for an entire attack session.

In still another embodiment, the invention relates to a method for modeling cyber-attack patterns in a honeypot system, wherein the features extracted during said first phase of feature extraction include some or all of the following features: Country; T-hour; T-day; T-month; T-isWeekend; T-night; T-preMorning; T-morning; T-afternoon; T-evening; SourceEntryAS; Client; PeerIdent; TargetIP; HostName; GET indicator; POST indicator; TotalRequests; ResourceType; ResourceTypeGroup; ResourceDepth; SQL-injection-attempt indicator; Resource Length; HTTP Version; Accept-Encoding; Accept-Language; ConnectionType; Victim; SSH-username; SSH-password; SSH-success; and SSH-Duration.

In another embodiment, the present invention relates to a method for modeling cyber-attack patterns in a honeypot system, wherein the features extracted during said second phase of feature extraction include statistics of numeric features and statistics of nominal features.

In still another embodiment, the invention relates to a method for modeling cyber-attack patterns in a honeypot system, wherein clustering attack profiles is performed using k-means and EM-Clustering algorithms.

The present invention is also directed to a monitored honeypot system, the main features of which are disclosed in the attached claims.

### Brief Description of the Drawings

In the drawings:
- Fig. 1 is a block diagram showing various components utilized in the modeling process of the present invention;
- Fig. 2 shows an example of a possible structure of a single attack record; and
- Fig. 3 is a flow chart describing the EM clustering algorithm.

### Detailed Description of the Invention

The present invention provides a centric method for modeling attack patterns in a honeypot system. The modeling approach is honeypot-centric, as all the observed attacks within a certain timeframe on all plurality of honeypots are aggregated and modeled together. The result of this modeling method is a set of attack patterns that describe different attack behaviors on the modeled honeypots.

In essence, the modeling approach of the invention is based on an analysis of attack metadata, rather than analyzing the entire network traffic data relating to the attacks.

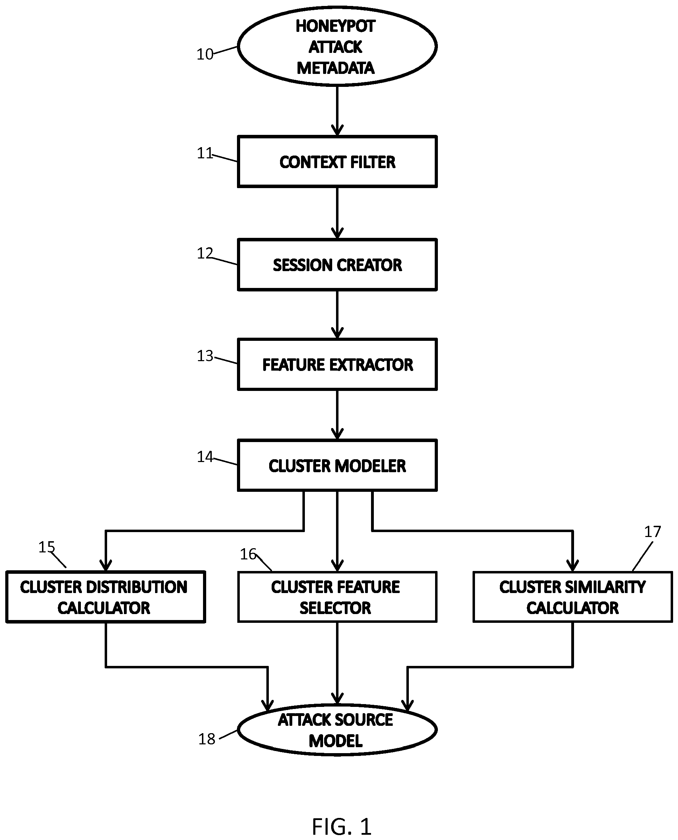

Fig. 1 is a block diagram illustrating the modeling process according to an embodiment of the present invention. Monitored cyber-attack metadata 10 is initially obtained. The metadata may originate from a repository of attack records, as each record in the dataset describes an individual attack on a monitored honeypot. The information recorded for each attack contains at least the following attributes:
- attacker ID - identifier of the attacker, e.g. the source IP address of the attacking machine;
- attack Timestamp - the timestamp of the observed attack; and
- attacked honeypot - identifier of the attacked monitored honeypot.

The information recorded for each attack may additionally contain information describing different aspects of the attacks. Possible features are the requested URL or attempted password in web or SSH based honeypots respectively. While the modeling process does not require the entire network traffic trace, the modeling process of the invention is applicable with data collected from "low", "medium" or "high" interaction honeypot systems.

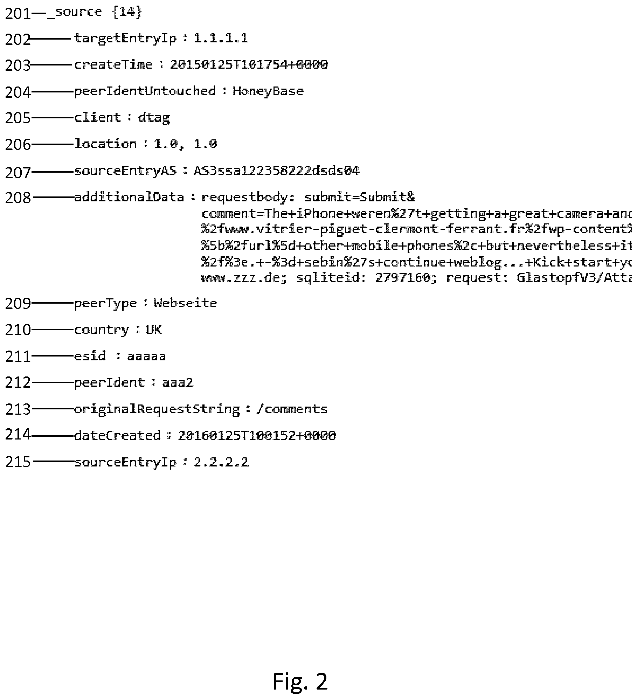

Fig. 2 shows an example of a possible structure of a single attack record. This exemplary record contains the metadata of an attack on a Glastopf honeypot, appropriate for web based cyber-attacks. Table 1 provides information regarding the data fields that are collected for each attack as presented in Fig. 2, wherein the left column represents the line number in Fig. 2, the middle column comprises a list of data fields corresponding to the line numbers of the left column, and the right column comprises a list of the corresponding descriptions of each data field.

**Table 1**

| Line | Data Field | Description |
|---|---|---|
| 202 | targerEntryIP | The IP address of the attacked honeypot |
| 203 | createTime | The timestamp that the observed attack was recorded in the system |
| 204 | peerIdentUntouched | The type of sensor attacked |
| 205 | client | The honeypot framework version |
| 206 | location | Location information about the attacker (derived from the IP address of the attacker) |
| 207 | sourceEntryAS | The ISP provider of the attacker (derived from the IP address of the attacker) |
| 208 | additionalData | Additional textual data that can be associated to the attack - in this example, the attack data consists of the header of the HTTP request. |
| 209 | peerType | The type of the honeypot |
| 210 | country | The country of the attacker (derived from the IP address of the attacker) |
| 211 | esid | Attack record Id (automatically generated) |
| 212 | peerIdent | The identifier of the honeypot in the system |
| 213 | originalRequestString | The original attack request observed by the honeypot |
| 214 | dateCreated | The timestamp of the observed attack |
| 214 | sourceEntryIP | The IP address of the attacker |

Returning to Fig. 1, metadata 10 is input to a context filter 11 adapted to filter the desired contextual circumstances of a cyber-attack during the modeling. Examples of contextual features may include:
- attack time - selecting attacks on specific date intervals, e.g. attacks between August 2015 and January 2016;
- attacked sensors - selecting only a subset of the monitored sensors;
- attacking machines - selecting a subset of the attacking machines according to their source IP addresses; and
- attacking countries - selecting a subset of attacking countries;

The context filter 11 may combine multiple filters using "AND", "OR" and "NOT" logical operators.

Once filtered to a desired subset, the subset is input to session creator 12, which is adapted to create attack sessions from filtered attack metadata. An attack session is defined as all the attack records that targeted the same honeypot in a certain time interval, e.g. one hour.

The attack sessions created by session creator 12 is analyzed by feature extractor 13, which is adapted to extract a set of hundreds of statistical features that describe each of the observed attack sessions in the dataset. The feature extraction is carried out in two phases. The first phase extracts features from individual attacks, while the second phase extracts features for an entire attack session.

Extracting features in the first phase for each observed attack depends on the type of honeypot an attack was observed on. Although some features are common to all honeypot types, such as the target IP address or target port, the most informative features vary according to the honeypot type. For example, attacks on web-based honeypots will mostly contain features that are associated with HTTP requests (http-method, host, URL, etc.), while attacks on SSH based honeypots will likely have features such as the username and password that the attacker tried in order to connect to a server.

An exemplary group of features that are extracted from a single attack is presented in Table 1. This table also maps for each feature the set of relevant honeypots. First a set of common features is specified, then features for web and SSH honeypot attack records are outlined. It is noted that the list of features in table 1 is for sake of illustrating the most common extracted feature. The features extracted in the process of the present invention however are not limited to those listed in table 1.

**Table 1**

| Feature | Notes | Honyepot |
|---|---|---|
| Country | Based on the source IP of the attacker | All Types |
| T-hour | Hour, day and month values, based on the timestamp of the attack | |
| T-day | | |
| T-month | | |
| T-isWeekend | Weekend indicator | |
| T-night | Fuzzy based indicators for different parts of the day | |
| T-preMorning | | |
| T-morning | | |
| T- afternoon | | |
| T-evening | | |
| SourceEntryAS | Autonomous system ID | |
| Client | Client honeypot environment | |
| PeerIdent | Honeypot ID | |
| TargetIP | Target IP | |
| HostName | e.g. MyHost.de | Web based honeypots |
| GET indicator | HTTP request type indicators | |
| POST indicator | | |
| TotalRequests | Number of requests within the current record (affects the next features if the record contains several requests). | |
| ResourceType | Analyzed from the GET/POST request, e.g. .txt, .doc, .php, .jpg, etc. | |
| ResourceTypeGroup | Grouping of the previous features in higher levels - text, pic, audio, video, code, etc. | |
| ResourceDepth | The depth of the request, e.g. aa/bb/cc/dd/file .text | |
| SQL-injection-attempt indicator | Search key words such as: select, from, all, 0=0, etc. | |
| Resource Length | The length of the resource string | |
| HTTP Version | e.g. HTTP/1.1 | |
| Accept- Encoding | e.g. gzip | |
| Accept- Language | e.g. de | |
| ConnectionType | The connection that was used | |
| Victim | Victim indicator | |
| SSH-username | Access user name | SSH based honeypots |
| SSH-password | Access password | |
| SSH -success | Success indicator 0 (fail) or 1 (success) | |
| SSH-Duration | The time difference (in seconds) between start and end connection time | |

The second phase of feature extraction relates to an entire attack session. Most of the features that are extracted are statistical aggregators on the entire observed attacks in the relevant session. Each feature from table 1 is converted into a series of statistical aggregators. Numeric features (e.g. the depth of the requested URL) are aggregated using at least one of the following popular statistics: Sum, Count, Mean, Variance, Standard Deviation, Minimum, Maximum, Range, Q1, Median and Q3. By contrast, nominal features (e.g. accessed file type) are aggregated using at least one of the following popular statistics: Count, Count Distinct, Count Not-Null, Distribution Ratio, Mode, Mode Ratio and Entropy. The above statistics are popular in terms of statistics and are well known to one skilled in the art of statistics. For sake of brevity the statistics will not be explained.

The result of the feature extractor is a set of attacks profiles, each profile describing a set of attacks. The aspects which describe an attack profile are generally: who the attacker is, e.g. the source IP of the attacker or the attacker's country; which honeypots were attacked; when the attacks occurred; and the attack method, e.g. the applied passwords, the attacked resources, SQL injection etc. as presented in detail in table 1.

Cluster modeler 14 is adapted to cluster attack profiles that were extracted by feature extractor 13 according to their features. Because attack sessions are honeypot-specific, clustering is performed for each honeypot type separately, i.e. clustering all the attacks of web-based honeypots separately from the attacks of SSH-based honeypots. Clustering is preferably performed in an unsupervised manner, as attack sessions are grouped together if they share similar characteristics. An example of two algorithms that may be used for clustering are k-means and EM-Clustering.

K-means follows a straightforward way to match a given data set through a certain number (k) of clusters, fixed a priori. The main idea is to define an initial set of k centroids randomly, one for each cluster. The next step is to take each point belonging to a given data set and associate it to the nearest centroid using a distance measure (e.g. Euclidian distance). After assigning all the data points, k new centroids are recalculated, resulting from the new assignments of the previous step. These two steps, i.e. clustering assignment and centroid calculation, are repeated until reach a termination condition, such as a fixed number of iteration or until there is no change in the centroids' values.

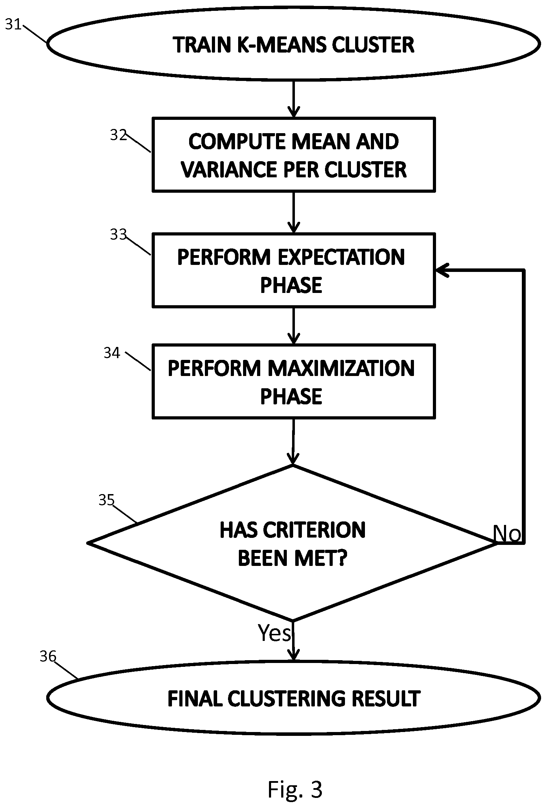

Expectation-Maximization (EM) clustering algorithms can be applied in order to find the maximum likelihood parameters of a statistical model. The EM iterations alternate between performing an expectation (E) step and a maximization (M) step. The E step creates a function for the expectation of the log-likelihood of the variables, using the current estimated parameters. The M step computes parameters maximizing the expected log-likelihood found on the E step. Fig. 3 is a flow chart describing the EM clustering algorithm. With reference to Fig. 3, the algorithm is perfomed as follows: At the first step 31, a k-Means clustering model is trained, as described above, with a dataset and a priory number of clusters (k). At the next step 32, the estimated mean and variance are computed for each cluster and feature, according to the instance's membership. At the next step 33 an Expectation phase is performed. For each instance in the dataset, the "best matching" cluster, i.e. the cluster with maximum estimated probability that the current instance's features are taken from the cluster's distribution parameters, is found according to the distribution parameters of the current centroids, assuming a Gaussian distribution with the current observed mean and standard in each cluster. At the next step 34, a maximization phase is performed, wherein the Gaussian distribution parameters, i.e. the mean and standard deviation, are updated for each cluster. At the next step 35, the current results are compared to a predefined criterion to see if the EM clustering has reached a satisfying result or not. The criterion can be, for example, a predefined number of iterations or a convergence condition where the difference in the log-likelihood between successive iterations is less than a certain threshold. If the criterion has not been met, steps 33, 34 and 35 are repeated until in stage 36 the criterion is met and the clustering result is final.

According to the invention, the optimal number of centroids can be empirically selected, i.e. the optimal k. This is achieved by using a wrapper procedure which iteratively evaluates the clustering results with different values of k. The evaluation can be performed using the minimum error criterion.

The clusters created by cluster modeler 14 are input to three different components, cluster distribution 15, cluster feature selector 16 and cluster similarity calculator 17, each of which is responsible of a different aspect of the attack pattern models.

Cluster distribution calculator 15 is responsible for enriching the centroid representation of the patterns observed by cluster modeler 14, i.e. calculate additional statistics. More particularly, at first, each attack session is assigned to the nearest centroid. Next, the distribution of the observed attack sessions is calculated across the discovered patterns. Finally, for each cluster-feature pair, a full statistical distribution is calculated according to the associated attack sessions. The statistical distribution includes a full distribution histogram along with statistical measures such as standard deviation, skewness and kurtosis. This representation adds an additional level of details which describe the characteristics of each discovered pattern.

The feature vector produced by cluster modeler 14 may contain hundreds of features. In order to aid security experts' analysis work, cluster feature selector 16 is adapted to outline the most important features which distinguish between discovered pattern clusters, i.e. to determine the top features that vary one cluster from another. This task is achieved by further examining the centroids generated by cluster modeler 14 and calculating the entropy metric for each feature. The features with the highest entropy are assumed to vary the most between the different discovered cluster-patterns. Thus, the features with the highest entropy metric are retrieved, as they contribute the most to differentiating between the various pattern-clusters.

Cluster similarity calculator 17 is adapted to calculate the closeness similarity between the discovered pattern-clusters discovered by cluster modeler 14. The similarity between each pattern pair is calculated using the Normalized Euclidean Distance between the two relevant cluster centroids. After calculating the similarity matrix between all possible pairs, the patterns are sorted according to their similarity. The result is a data structure which specifies, for each discovered pattern-cluster, a list of corresponding pattern-clusters from the most similar to the least similar. This calculation may aid security experts to better understand the differences between the discovered patterns.

Attack source model 18 is a repository which stores all the trained models that were discovered by the other components. The models are persistently inserted into the repository along with their context filters, as selected for context filter 11, in addition to all the relevant configurations of the applied modeling techniques and algorithms, such as k and the number of EM iterations. A single attack source model has the following structure:
- A list of discovered pattern-clusters for each honeypot type;
- The centroid of features for each pattern;
- Distribution statistics for each feature-pattern pair;
- A list of the most influencing patterns for each honeypot type; and
- A similarity matrix between all pattern pairs, for each honeypot type.

Data communicated between an attacker and the honeypot is monitoring by one or more sensors, deployed along the communication channels of the honeypot. The honeypot includes a hardware processor adapted to analyze a portion of the communicated data and generate a model that represents cyber-attack patterns.

As various embodiments have been described and illustrated, it should be understood that variations will be apparent to one skilled in the art without departing from the principles herein. Accordingly, the invention is not to be limited to the specific embodiments described and illustrated in the drawings.

## Claims

1. A computer-implemented method for modeling cyber-attack patterns by a honeypot system
wherein said honeypot system supports a plurality of protocols, comprising:
a. defining a set of attack features;
b. obtaining a dataset comprising monitored cyber-attack metadata;
c. filtering said dataset to a desired contextual subset of cyber-attacks using a context filter (11);
d. defining attack sessions from said contextual subset using a session creator (12);
e. extracting values for each feature, respectively, from each said attack sessions using a feature extractor (13);
f. generating from said features values attack profiles, each profile relating to a set of attacks;
g. clustering the attack profiles based on features of said profiles using a cluster modeler (14) and creating pattern clusters using the cluster modeler (14);
h. enriching the cluster centroid representation of the patterns observed by the cluster modeler (14); using a cluster distribution calculator (15);
i. outlining important features which distinguish between pattern clusters using a cluster feature selector (16);
**characterized by** further comprising:
j. calculating a closeness similarity between said pattern clusters using a cluster similarity calculator (17), the calculating comprising steps k., 1. and m.;
k. calculating the similarity between each pattern pair using the Normalized Euclidean Distance between the two relevant cluster centroids;
l. calculating the similarity matrix between all possible pairs;
m. sorting the patterns according to their similarity, to obtain a data structure which specifies, for each discovered pattern cluster, a list of corresponding pattern clusters from the most similar to the least similar;
n. analyzing a portion of the communicated data using a hardware processor of said honeypot system;
o. based on steps h., i., and j., generating a model that represents cyber-attack patterns; and
p. storing said model in a repository.

2. A method according to claim 1, wherein for each monitored cyber-attack, data fields are collected that contain some or all of the following: the IP address of the attacked honeypot; the timestamp that the observed attack was recorded in the system; the honeypot framework version; location information about the attacker (derived from the IP address of the attacker); the ISP provider of the attacker (derived from the IP address of the attacker); additional textual data that can be associated to the attack - in this example, the attack data consists of the header of the HTTP request; the type of the honeypot; the country of the attacker (derived from the IP address of the attacker); attack record Id (automatically generated); The identifier of the honeypot in the system; the original attack request observed by the honeypot; the timestamp of the observed attack; and the IP address of the attacker.

3. A method according to claim 1, wherein the contextual subset of cyber-attacks relates to at least one of the following: the attack time; the attacked sensors; the attacking machines; or the attacking countries.

4. A method according to claim 1, wherein the feature extraction is carried out in two phases, wherein the first phase extracts features from individual attacks, and the second phase extracts features for an entire attack session.

5. A method according to claim 4, wherein the features extracted during said first phase of feature extraction include some or all of the following features: Country; T-hour; T-day; T-month; T-isWeekend; T-night; T-preMorning; T-morning; T-afternoon; T-evening; SourceEntryAS; Client; PeerIdent; TargetIP; HostName; GET indicator; POST indicator; TotalRequests; ResourceType; ResourceTypeGroup; ResourceDepth; SQL-injection-attempt indicator; Resource Length; HTTP Version; Accept-Encoding; Accept-Language; ConnectionType; Victim; SSH-username; SSH-password; SSH-success; and SSH-Duration.

6. A method according to claim 4, wherein the features extracted during said second phase of feature extraction include statistics of numeric features and statistics of nominal features.

7. A method according to claim 1, wherein clustering attack profiles is performed using k-means and EM-Clustering algorithms.

8. A monitored honeypot system wherein said honeypot system supports a plurality of protocols, comprising:
a. at least one sensor for monitoring data being communicated between an attacker and said honeypot;
b. at least one hardware processor adapted to analyze a portion of said communicated data by:
b.1) defining a set of attack features;
b.2) obtaining a dataset comprising monitored cyber-attack metadata;
b.3) filtering said dataset to a desired contextual subset of cyber-attacks using a context filter (11);
b.4) defining attack sessions from said contextual subset using a session creator (12);
b.5) extracting values for each feature, respectively, from each said attack sessions using a feature extractor (13);
b.6) generating from said features values attack profiles, each profile relating to a set of attacks;
b.7) clustering the attack profiles based on features of said profiles using a cluster modeler (14) and creating pattern clusters using the cluster modeler (14);
b.8) enriching the cluster centroid representation of the patterns observed by the cluster modeler (14); using a cluster distribution calculator (15);
b.9) outlining important features which distinguish between pattern clusters using a cluster feature selector (16);
**characterized in that** said hardware processor is further adapted to:
b.10) calculate a closeness similarity between said pattern clusters using a cluster similarity calculator (17), wherein, to calculate the closeness similarity, the hardware processor is adapted to carry out steps c.1, c.2, and c.3;
c.1) calculate the similarity between each pattern pair using the Normalized Euclidean Distance between the two relevant cluster centroids;
c.2) calculate the similarity matrix between all possible pairs;
c.3) sort the patterns according to their similarity, to obtain a data structure which specifies, for each discovered pattern cluster a list of corresponding pattern clusters from the most similar to the least similar;
b.11) analyze a portion of the communicated data using a hardware processor of said honeypot system;
b.12) based on steps b.8), b.9), and b.10), generate a model of cyber-attack patterns; and
b.13) store said model in a memory.

9. A monitored honeypot system according to claim 8, in which for each monitored cyber-attack, data fields are collected that contain some or all of the following: the IP address of the attacked honeypot; the timestamp that the observed attack was recorded in the system; the honeypot framework version; location information about the attacker (derived from the IP address of the attacker); the ISP provider of the attacker (derived from the IP address of the attacker); additional textual data that can be associated to the attack - in this example, the attack data consists of the header of the HTTP request; the type of the honeypot; the country of the attacker (derived from the IP address of the attacker); attack record Id (automatically generated); The identifier of the honeypot in the system; the original attack request observed by the honeypot; the timestamp of the observed attack; and the IP address of the attacker.

10. A monitored honeypot system according to claim 8, in which the contextual subset of cyber-attacks relates to at least one of the following: the attack time; the attacked sensors; the attacking machines; or the attacking countries.

11. A monitored honeypot system according to claim 8, in which the feature extraction is carried out in two phases, wherein the first phase extracts features from individual attacks, and the second phase extracts features for an entire attack session.

12. A monitored honeypot system according to claim 11, in which the features extracted during said first phase of feature extraction include some or all of the following features: Country; T-hour; T-day; T-month; T-isWeekend; T-night; T-preMorning; T-morning; T-afternoon; T-evening; SourceEntryAS; Client; PeerIdent; TargetIP; HostName; GET indicator; POST indicator; TotalRequests; ResourceType; ResourceTypeGroup; ResourceDepth; SQL-injection-attempt indicator; Resource Length; HTTP Version; Accept-Encoding; Accept-Language; ConnectionType; Victim; SSH-username; SSH-password; SSH-success; and SSH-Duration.

13. A monitored honeypot system according to claim 12, in which features extracted during said second phase of feature extraction include statistics of numeric features and statistics of nominal features.

14. A monitored honeypot system according to claim 8, in which clustering attack profiles is performed using k-means and EM-Clustering algorithms.

## Patentansprüche

1. Computerimplementiertes Verfahren zur Modellerstellung für Hackerangriffsmuster durch ein Honigtopfsystem, wobei das Honigtopfsystem eine Vielzahl von Protokollen unterstützt, umfassend:
a. Definieren eines Satzes von Angriffsmerkmalen;
b. Erhalten eines Datensatzes, der überwachte Hackerangriff-Metadaten umfasst;
c. Filtern des Datensatzes hinsichtlich einer gewünschten kontextabhängigen Teilmenge von Hackerangriffen unter Verwendung eines Kontextfilters (11);
d. Definieren von Angriffssitzungen von der kontextabhängigen Teilmenge unter Verwendung einer Sitzungserzeugungseinrichtung (12);
e. Extrahieren von jeweiligen Werten für jedes Merkmal aus jeder der Angriffssitzungen unter Verwendung einer Merkmalsextraktionseinrichtung (13);
f. Erzeugen von Angriffsprofilen aus den Merkmalswerten, wobei sich jedes Profil auf einen Satz von Angriffen bezieht;
g. Bilden von Clustern mit den Angriffsprofilen basierend auf Merkmalen der Profile unter Verwendung einer Cluster-Modellerstellungseinrichtung (14) und Erzeugen von Muster-Clustern unter Verwendung der Cluster-Modellerstellungseinrichtung (14);
h. Anreichern der Cluster-Schwerpunktdarstellung der durch die Cluster-Modellerstellungseinrichtung (14) beobachteten Muster; Verwenden einer Cluster-Verteilungsrecheneinrichtung (15);
i. Abgrenzen wichtiger Merkmale, die zwischen Muster-Clustern unterscheiden, unter Verwendung einer Cluster-Merkmalsauswahleinrichtung (16);
ferner **gekennzeichnet durch**:
j. Berechnen einer Nähenähnlichkeit zwischen den Muster-Clustern unter Verwendung einer Cluster-Ähnlichkeitsrecheneinrichtung (17), wobei das Berechnen Schritte k., l. und m. umfasst;
k. Berechnen der Ähnlichkeit zwischen jedem Musterpaar unter Verwendung des normierten euklidischen Abstands zwischen den beiden relevanten Cluster-Schwerpunkten;
l. Berechnen der Ähnlichkeitsmatrix zwischen allen möglichen Paaren;
m. Sortieren der Muster gemäß ihrer Ähnlichkeit, um eine Datenstruktur zu erhalten, die für jedes entdeckte Muster-Cluster eine Liste von entsprechenden Muster-Clustern von dem ähnlichsten zu dem am wenigsten ähnlichen spezifiziert;
n. Analysieren eines Teils der übermittelten Daten unter Verwendung eines Hardware-Prozessors des Honigtopfsystems;
o. basierend auf den Schritten h., i. und j., Erzeugen eines Modells, das Hackerangriffsmuster darstellt; und
p. Speichern des Modells in einem Speicher.

2. Verfahren nach Anspruch 1, wobei für jeden überwachten Hackerangriff Datenfelder erfasst werden, die einige oder alle der folgenden enthalten: die IP-Adresse des angegriffenen Honigtopfs; den Zeitstempel, zu dem der beobachtete Angriff in dem System aufgezeichnet wurde; die Honigtopf-Framework-Version; eine Ortsinformation hinsichtlich des Angreifers (abgeleitet von der IP-Adresse des Angreifers); den ISP-Anbieter des Angreifers (abgeleitet von der IP-Adresse des Angreifers); zusätzliche Textdaten, die dem Angriff zugehörig sein können - bei diesem Beispiel bestehen die Angriffsdaten aus dem Header der HTTP-Anfrage; den Typ des Honigtopfs; das Land des Angreifers (abgeleitet von der IP-Adresse des Angreifers); eine Angriffsaufzeichnungs-Id (automatisch erzeugt); den Identifikator des Honigtopfs in dem System; die durch den Honigtopf beobachtete ursprüngliche Angriffsanfrage; den Zeitstempel des beobachteten Angriffs; und die IP-Adresse des Angreifers.

3. Verfahren nach Anspruch 1, wobei sich die kontextabhängige Teilmenge von Hackerangriffen auf zumindest eines der folgenden bezieht: die Angriffszeit; die angegriffenen Sensoren; die angreifenden Maschinen; oder die angreifenden Länder.

4. Verfahren nach Anspruch 1, wobei die Merkmalsextraktion in zwei Phasen ausgeführt wird, wobei die erste Phase Merkmale aus einzelnen Angriffen extrahiert und die zweite Phase Merkmale für eine gesamte Angriffssitzung extrahiert.

5. Verfahren nach Anspruch 4, wobei die während der ersten Phase der Merkmalsextraktion extrahierten Merkmale einige oder alle der folgenden Merkmale umfassen: Country; T-hour; T-day; T-month; T-isWeekend; T-night; T-preMorning; T-morning; T-afternoon; T-evening; SourceEntryAS; Client; Peerldent; TargetIP; HostName; GET indicator; POST indicator; TotalRequests; ResourceType; ResourceTypeGroup; ResourceDepth; SQL-injection-attempt indicator; Resource Length; HTTP Version; Accept-Encoding; Accept-Language; ConnectionType; Victim; SSH-username; SSH-password; SSH-success; und SSH-Duration.

6. Verfahren nach Anspruch 4, wobei die während der zweiten Phase der Merkmalsextraktion extrahierten Merkmale eine Statistik numerischer Merkmale und eine Statistik nominaler Merkmale umfassen.

7. Verfahren nach Anspruch 1, wobei das Bilden von Clustern mit Angriffsprofilen unter Verwendung eines k-Means- und eines EM-Clustering-Algorithmus durchgeführt wird.

8. System eines überwachten Honigtopfs, wobei das Honigtopfsystem eine Vielzahl von Protokollen unterstützt, umfassend:
a. zumindest einen Sensor zum Überwachen von Daten, die zwischen einem Angreifer und dem Honigtopf übermittelt werden;
b. zumindest einen Hardware-Prozessor, der geeignet ist, um einen Teil der übermittelten Daten zu analysieren, durch:
b.1) Definieren eines Satzes von Angriffsmerkmalen;
b.2) Erhalten eines Datensatzes, der überwachte Hackerangriff-Metadaten umfasst;
b.3) Filtern des Datensatzes hinsichtlich einer gewünschten kontextabhängigen Teilmenge von Hackerangriffen unter Verwendung eines Kontextfilters (11);
b.4) Definieren von Angriffssitzungen von der kontextabhängigen Teilmenge unter Verwendung einer Sitzungserzeugungseinrichtung (12);
b.5) Extrahieren von jeweiligen Werten für jedes Merkmal aus jeder der Angriffssitzungen unter Verwendung einer Merkmalsextraktionseinrichtung (13);
b.6) Erzeugen von Angriffsprofilen aus den Merkmalswerten, wobei sich jedes Profil auf einen Satz von Angriffen bezieht;
b.7) Bilden von Clustern mit den Angriffsprofilen basierend auf Merkmalen der Profile unter Verwendung einer Cluster-Modellerstellungseinrichtung (14) und Erzeugen von Muster-Clustern unter Verwendung der Cluster-Modellerstellungseinrichtung (14);
b.8) Anreichern der Cluster-Schwerpunktdarstellung der durch die Cluster-Modellerstellungseinrichtung (14) beobachteten Muster; Verwenden einer Cluster-Verteilungsrecheneinrichtung (15);
b.9) Abgrenzen wichtiger Merkmale, die zwischen Muster-Clustern unterscheiden, unter Verwendung einer Cluster-Merkmalsauswahleinrichtung (16);
**dadurch gekennzeichnet, dass** der Hardware-Prozessor ferner geeignet ist zum:
b.10) Berechnen einer Nähenähnlichkeit zwischen den Muster-Clustern unter Verwendung einer Cluster-Ähnlichkeitsrecheneinrichtung (17), wobei der Hardware-Prozessor geeignet ist, um zum Berechnen der Nähenähnlichkeit Schritte c.1, c.2 und c.3 auszuführen;
c.1) Berechnen der Ähnlichkeit zwischen jedem Musterpaar unter Verwendung des normierten euklidischen Abstands zwischen den beiden relevanten Cluster-Schwerpunkten;
c.2) Berechnen der Ähnlichkeitsmatrix zwischen allen möglichen Paaren;
c.3) Sortieren der Muster gemäß ihrer Ähnlichkeit, um eine Datenstruktur zu erhalten, die für jedes entdeckte Muster-Cluster eine Liste von entsprechenden Muster-Clustern von dem ähnlichsten zu dem am wenigsten ähnlichen spezifiziert;
b.11) Analysieren eines Teils der übermittelten Daten unter Verwendung eines Hardware-Prozessors des Honigtopfsystems;
b.12) basierend auf den Schritten b.8), b.9) und b.10), Erzeugen eines Modells von Hackerangriffsmustern; und
b.13) Speichern des Modells in einem Speicher.

9. System eines überwachten Honigtopfs nach Anspruch 8, wobei für jeden überwachten Hackerangriff Datenfelder erfasst werden, die einige oder alle der folgenden enthalten: die IP-Adresse des angegriffenen Honigtopfs; den Zeitstempel, zu dem der beobachtete Angriff in dem System aufgezeichnet wurde; die Honigtopf-Framework-Version; eine Ortsinformation hinsichtlich des Angreifers (abgeleitet von der IP-Adresse des Angreifers); den ISP-Anbieter des Angreifers (abgeleitet von der IP-Adresse des Angreifers); zusätzliche Textdaten, die dem Angriff zugehörig sein können - bei diesem Beispiel bestehen die Angriffsdaten aus dem Header der HTTP-Anfrage; den Typ des Honigtopfs; das Land des Angreifers (abgeleitet von der IP-Adresse des Angreifers); eine Angriffsaufzeichnungs-Id (automatisch erzeugt); den Identifikator des Honigtopfs in dem System; die durch den Honigtopf beobachtete ursprüngliche Angriffsanfrage; den Zeitstempel des beobachteten Angriffs; und die IP-Adresse des Angreifers.

10. System eines überwachten Honigtopfs nach Anspruch 8, wobei sich die kontextabhängige Teilmenge von Hackerangriffen auf zumindest eines der folgenden bezieht: die Angriffszeit; die angegriffenen Sensoren; die angreifenden Maschinen; oder die angreifenden Länder.

11. System eines überwachten Honigtopfs nach Anspruch 8, wobei die Merkmalsextraktion in zwei Phasen ausgeführt wird, wobei die erste Phase Merkmale aus einzelnen Angriffen extrahiert und die zweite Phase Merkmale für eine gesamte Angriffssitzung extrahiert.

12. System eines überwachten Honigtopfs nach Anspruch 11, wobei die während der ersten Phase der Merkmalsextraktion extrahierten Merkmale einige oder alle der folgenden Merkmale umfassen: Country; T-hour; T-day; T-month; T-isWeekend; T-night; T-preMorning; T-morning; T-afternoon; T-evening; SourceEntryAS; Client; Peerldent; TargetIP; HostName; GET indicator; POST indicator; TotalRequests; ResourceType; ResourceTypeGroup; ResourceDepth; SQL-injection-attempt indicator; Resource Length; HTTP Version; Accept-Encoding; Accept-Language; ConnectionType; Victim; SSH-username; SSH-password; SSH-success; und SSH-Duration.

13. System eines überwachten Honigtopfs nach Anspruch 12, wobei die während der zweiten Phase der Merkmalsextraktion extrahierten Merkmale eine Statistik numerischer Merkmale und eine Statistik nominaler Merkmale umfassen.

14. System eines überwachten Honigtopfs nach Anspruch 8, wobei das Bilden von Clustern mit Angriffsprofilen unter Verwendung eines k-Means- und eines EM-Clustering-Algorithmus durchgeführt wird.

## Revendications

1. Procédé mis en œuvre par ordinateur de modélisation de schémas de cyber-attaque par un système de pot de miel (honeypot), dans lequel ledit système de pot de miel prend en charge une pluralité de protocoles, comprenant :
a. la définition d'un ensemble de caractéristiques d'attaque ;
b. l'obtention d'un ensemble de données comprenant des métadonnées de cyber-attaques surveillées ;
c. le filtrage dudit ensemble de données en un sous-ensemble contextuel désiré de cyber-attaques en utilisant un filtre de contexte (11) ;
d. la définition de sessions d'attaque à partir dudit sous-ensemble contextuel en utilisant un créateur de session (12) ;
e. l'extraction de valeurs pour chaque caractéristique, respectivement, à partir de chacune desdites sessions d'attaque en utilisant un extracteur de caractéristiques (13) ;
f. la génération, à partir desdites valeurs de caractéristiques, de profils d'attaque, chaque profil concernant un ensemble d'attaques ;
g. le regroupement des profils d'attaque sur la base de caractéristiques desdits profils en utilisant un modélisateur de groupements (14) et la création de groupements de schémas en utilisant le modélisateur de groupements (14) ;
h. l'enrichissement de la représentation de centroïde de groupement des schémas observés par le modélisateur de groupements (14) ;
l'utilisation d'un calculateur de distribution de groupements (15) ;
i. la spécification de caractéristiques importantes qui établissent une distinction entre des groupements de schémas en utilisant un sélecteur de caractéristique de groupement (16) ;
**caractérisé en ce qu'**il comprend en outre :
j. le calcul d'une similarité de proximité entre lesdits groupements de schémas en utilisant un calculateur de similarité de groupements (17), le calcul comprenant des étapes k., l. et m. ;
k. le calcul de la similarité entre chaque paire de schémas en utilisant la distance euclidienne normalisée entre les deux centroïdes de groupement pertinents ;
l. le calcul de la matrice de similarité entre toutes les paires possibles ;
m. le triage des schémas en fonction de leur similarité, pour obtenir une structure de données qui spécifie, pour chaque groupement de schémas découvert, une liste de groupements de schémas correspondants du plus similaire au moins similaire ;
n. l'analyse d'une portion des données communiquées en utilisant un processeur matériel dudit système de pot de miel ;
o. sur la base des étapes h., i. et j., la génération d'un modèle qui représente des schémas de cyber-attaque ; et
p. le stockage dudit modèle dans un dépôt.

2. Procédé selon la revendication 1, dans lequel, pour chaque cyber-attaque surveillée, des champs de données sont collectés, qui contiennent certains ou la totalité de ce qui suit : l'adresse IP du pot de miel attaqué ; l'horodatage où l'attaque observée a été enregistrée dans le système ; la version de structure de pot de miel ; des informations de localisation concernant l'attaquant (obtenues à partir de l'adresse IP de l'attaquant) ; le fournisseur d'ISP de l'attaquant (obtenu à partir de l'adresse IP de l'attaquant) ; des données de texte additionnelles qui peuvent être associées à l'attaque - dans cet exemple, les données d'attaque sont constituées par l'en-tête de la requête HTTP ; le type du pot de miel ; le pays de l'attaquant (obtenu à partir de l'adresse IP de l'attaquant) ; l'Id d'enregistrement d'attaque (généré automatiquement) ; l'identificateur du pot de miel dans le système ; la requête d'attaque originale observée par le pot de miel ; l'horodatage de l'attaque observée ; et l'adresse IP de l'attaquant.

3. Procédé selon la revendication 1, dans lequel le sous-ensemble contextuel de cyber-attaques concerne au moins un parmi ce qui suit : l'heure d'attaque ; les capteurs attaqués ; les machines attaquantes ; ou les pays attaquants.

4. Procédé selon la revendication 1, dans lequel l'extraction de caractéristiques est réalisée en deux phases, dans lequel la première phase extrait des caractéristiques à partir d'attaques individuelles, et la seconde phase extrait des caractéristiques pour toute la session d'attaque.

5. Procédé selon la revendication 4, dans lequel les caractéristiques extraites durant ladite première phase d'extraction de caractéristiques incluent certaines ou la totalité des caractéristiques suivantes : Pays ; T-heure ; T-jour ; T-mois ; T-isWeekend ; T-nuit ; T-pré-Matin ; T-matin ; T-après-midi ; T-soir ; AS-Entrée-Source ; Client ; Ident-Pair ; IP-Cible ; Nom-Hôte ; indicateur GET ; indicateur POST ; Total-Requêtes ; Type-Ressource ; Groupe-Type-Ressource ; Profondeur-Ressource ; indicateur tentative-injection-SQL ; Longueur Ressource ; Version HTTP ; Accepter-Codage ; Accepter-Langage ; Type-Connexion ; Victime ; nom-utilisateur-SSH ; mot-de-passe-SSH ; succès-SSH ; et durée-SSH.

6. Procédé selon la revendication 4, dans lequel les caractéristiques extraites durant ladite seconde phase d'extraction de caractéristiques incluent des statistiques de caractéristiques numériques et des statistiques de caractéristiques nominales.

7. Procédé selon la revendication 1, dans lequel le regroupement de profils d'attaque est effectué en utilisant algorithmes de regroupement EM et des k moyennes.

8. Système de pot de miel surveillé dans lequel ledit système de pot de miel prend en charge une pluralité de protocoles, comprenant :
a. au moins un capteur pour surveiller des données qui sont communiquées entre un attaquant et ledit pot de miel ;
b. au moins un processeur matériel adapté pour analyser une portion desdites données communiquées par :
b.1) la définition d'un ensemble de caractéristiques d'attaque ;
b.2) l'obtention d'un ensemble de données comprenant des métadonnées de cyber-attaques surveillées ;
b.3) le filtrage dudit ensemble de données en un sous-ensemble contextuel désiré de cyber-attaques en utilisant un filtre de contexte (11) ;
b.4) la définition de sessions d'attaque à partir dudit sous-ensemble contextuel en utilisant un créateur de session (12) ;
b.5) l'extraction de valeurs pour chaque caractéristique, respectivement, à partir de chacune desdites sessions d'attaque en utilisant un extracteur de caractéristiques (13) ;
b.6) la génération, à partir desdites valeurs de caractéristiques, de profils d'attaque, chaque profil concernant un ensemble d'attaques ;
b.7) le regroupement des profils d'attaque sur la base de caractéristiques desdits profils en utilisant un modélisateur de groupements (14) et la création de groupements de schémas en utilisant le modélisateur de groupements (14) ;
b.8) l'enrichissement de la représentation de centroïde de groupement des schémas observés par le modélisateur de groupements (14) ;
l'utilisation d'un calculateur de distribution de groupements (15) ;
b.9) la spécification de caractéristiques importantes qui établissent une distinction entre des groupements de schémas en utilisant un sélecteur de caractéristique de groupement (16) ;
**caractérisé en ce que** ledit processeur matériel est adapté en outre pour :
b.10) calculer une similarité de proximité entre lesdits groupements de schémas en utilisant un calculateur de similarité de groupements (17), dans lequel, pour calculer la similarité de proximité, le processeur matériel est adapté pour exécuter les étapes c.1, c.2 et c.3 ;
c.1) calculer la similarité entre chaque paire de schémas en utilisant la distance euclidienne normalisée entre les deux centroïdes de groupement pertinents ;
c.2) calculer la matrice de similarité entre toutes les paires possibles ;
c.3) trier les schémas en fonction de leur similarité, pour obtenir une structure de données qui spécifie, pour chaque groupement de schémas découvert, une liste de groupements de schémas correspondants du plus similaire au moins similaire ;
b.11) analyser une portion des données communiquées en utilisant un processeur matériel dudit système de pot de miel ;
b.12) sur la base des étapes b.8), b.9) et b.10), générer un modèle de schémas de cyber-attaque ; et
b.13) stoker ledit modèle dans une mémoire.

9. Système de pot de miel surveillé selon la revendication 8, dans lequel, pour chaque cyber-attaque surveillée, des champs de données sont collectés, qui contiennent certains ou la totalité de ce qui suit : l'adresse IP du pot de miel attaqué ; l'horodatage où l'attaque observée a été enregistrée dans le système ; la version de structure de pot de miel ; des informations de localisation concernant l'attaquant (obtenues à partir de l'adresse IP de l'attaquant) ; le fournisseur d'ISP de l'attaquant (obtenu à partir de l'adresse IP de l'attaquant) ; des données de texte additionnelles qui peuvent être associées à l'attaque - dans cet exemple, les données d'attaque sont constituées par l'en-tête de la requête HTTP ; le type du pot de miel ; le pays de l'attaquant (obtenu à partir de l'adresse IP de l'attaquant) ; l'Id d'enregistrement d'attaque (généré automatiquement) ; l'identificateur du pot de miel dans le système ; la requête d'attaque originale observée par le pot de miel ; l'horodatage de l'attaque observée ; et l'adresse IP de l'attaquant.

10. Système de pot de miel surveillé selon la revendication 8, dans lequel le sous-ensemble contextuel de cyber-attaques concerne au moins un parmi ce qui suit : l'heure d'attaque ; les capteurs attaqués ; les machines attaquantes ; ou les pays attaquants.

11. Système de pot de miel surveillé selon la revendication 8, dans lequel l'extraction de caractéristiques est réalisée en deux phases, dans lequel la première phase extrait des caractéristiques à partir d'attaques individuelles, et la seconde phase extrait des caractéristiques pour une session d'attaque complète.

12. Système de pot de miel surveillé selon la revendication 11, dans lequel les caractéristiques extraites durant ladite première phase d'extraction de caractéristiques incluent certaines ou la totalité des caractéristiques suivantes : Pays ; T-heure ; T-jour ; T-mois ; T-isWeekend ; T-nuit ; T-pré-Matin ; T-matin ; T-après-midi ; T-soir ; AS-Entrée-Source ; Client ; Ident-Pair ; IP-Cible ; Nom-Hôte ; indicateur GET ; indicateur POST ; Total-Requêtes ; Type-Ressource ; Groupe-Type-Ressource ; Profondeur-Ressource ; indicateur tentative-injection-SQL ; Longueur Ressource ; Version HTTP ; Accepter-Codage ; Accepter-Langage ; Type-Connexion ; Victime ; nom-utilisateur-SSH ; mot-de-passe-SSH ; succès-SSH ; et durée-SSH.

13. Système de pot de miel surveillé selon la revendication 12, dans lequel des caractéristiques extraites durant ladite seconde phase d'extraction de caractéristiques incluent des statistiques de caractéristiques numériques et des statistiques de caractéristiques nominales.

14. Système de pot de miel surveillé selon la revendication 8, dans lequel le regroupement de profils d'attaque est effectué en utilisant algorithmes de regroupement EM et des k moyennes.
